# EUROPEAN PATENT APPLICATION

(11) **EP 4 286 861 A1**
(43) Date of publication of application: **06.12.2023**
(21) Application number: 22176720.5
(22) Date of filing: 01.06.2022
(51) Int. Cl.: G01P 13/00, B60Q 5/00, G01P 15/00, H04S 7/00, H04R 5/02

(54) **A SYSTEM, A METHOD AND A COMPUTER PROGRAM PRODUCT FOR PROVIDING AN INDICATION OF AN ACCELERATION OR A CHANGE OF ORIENTATION OF A VEHICLE AND SUCH A VEHICLE**

(71) Applicant: Bayerische Motoren Werke Aktiengesellschaft, 80809 München (DE)
(72) Inventor: Zaki, Tarek, 81829 München (DE)

(57) **Abstract**

Disclosed is a system for providing an indication of an acceleration of a vehicle or a change of orientation of the vehicle with respect to the environment of the vehicle. The system comprises:
at least one detector configured to detect an actual acceleration of the vehicle or a change of orientation of the vehicle and to provide a detection output based thereon;
a processing unit configured to receive the detection output, the processing unit further being configured to generate a control signal based thereon; and
a sound system comprising a plurality of acoustic output devices,
wherein the sound system is configured to receive the control signal and to generate and output an audible sound as a function of the control signal, wherein the control signal is arranged to cause a spatial audio pattern of the sound system to be modified when compared with a reference spatial audio pattern applicable when no actual acceleration of the vehicle and no change of orientation of the vehicle has been detected.

Also disclosed is a vehicle comprising the system, a corresponding method and a computer program.

## Description

The present invention relates to a vehicle and to a system and method for use in connection with such a vehicle. The invention further relates to a computer program for carrying out the method.

The present invention can, in principle, be used in connection with any type of vehicle, in particular motorised vehicles, including vehicles for surface transportation, such as (passenger) cars, lorries / trucks, busses or coaches, rail-bound-vehicles such as trains, aerial vehicles and water-based vehicles such as ships. Given that the invention finds particular application in (passenger) cars, the invention will be described primarily in connection with cars, without being limited to this. In particular, one skilled in the art will not have any difficulties, guided by the present disclosure, to implement the invention in the context of vehicles other than cars.

A large number of people experience motion sickness (also referred to as kinetosis, among other names) when travelling in a vehicle. Typically, this problem is exacerbated if the person travelling in the vehicle and susceptible to motion sickness (in the following simply "person" or "user") looks at an object within the vehicle, in particular an object which is substantially still with respect to the vehicle, while the vehicle may change its orientation with respect to the environment or may accelerate and decelerate, both in a longitudinal direction (i.e. the main direction of travel) or in a transverse direction, for example when the vehicle passes through a curve or makes a turn (lateral acceleration) or passes over a speed bump or other uneven road surface etc. (vertical acceleration) or combinations thereof. As used herein, the term "acceleration", "accelerate" and similar is preferably intended to be understood to encompass not only acceleration, but also deceleration (effectively a negative acceleration), in any direction, unless the context specifies otherwise.

DE 10 2018 214 975 A1 discloses a system for visually indicating an anticipated acceleration of an autonomously driving vehicle, including acceleration caused by the vehicle passing through a curve, to a person travelling in the vehicle. Information regarding the anticipated acceleration is derived from a navigation system of the autonomously driving vehicle. This document also briefly mentions the possibility of indicating the anticipated acceleration by means of an acoustic signal, however without disclosing any details regarding this idea.

It is an object of at least some embodiments of the present invention to provide an alternative technique of providing an indication of an acceleration of a vehicle, in particular an improved technique of providing an indication of an acceleration of a vehicle. It is a further such object to provide a technique of providing an indication of a change of orientation of the vehicle with respect to the environment of the vehicle.

In a first aspect, the present invention provides a system for providing an indication of an acceleration of a vehicle or a change of orientation of the vehicle with respect to the environment of the vehicle, the system comprising:
at least one detector configured to detect an actual acceleration of the vehicle or a change of orientation of the vehicle and to provide a detection output based thereon;
a processing unit configured to receive the detection output, the processing unit further being configured to generate a control signal based thereon; and
a sound system comprising a plurality of acoustic output devices,
wherein the sound system is configured to receive the control signal and to generate and output an audible sound as a function of the control signal, wherein the control signal is arranged to cause a spatial audio pattern of the sound system to be modified when compared with a reference spatial audio pattern applicable when no actual acceleration of the vehicle and no change of orientation of the vehicle has been detected.

In the following, the expression "change of orientation of the vehicle with respect to the environment of the vehicle" is sometimes shortened to "change of orientation" in the interest of a more compact description. The meaning of both expressions is intended to be the same, except where expressly indicated.

In the sense of the invention, the term "actual acceleration" refers not simply to a theoretical value of acceleration that the vehicle may achieve (sometimes expressed in terms of time taken to accelerate from 0 to 100 km per hour), but a current, actual acceleration of the vehicle in a physical sense. It is however to be appreciated that the term "actual acceleration" as detected by the detector does not need to be a value which (directly) provides the correct measurement of the actual acceleration as expressed in (correct) physical units, such as a value expressed in m/s². Instead, the term "actual acceleration" can, in principle, mean any information which (at least approximately) characterises the acceleration of the vehicle, in particular (at least approximately) uniquely characterises the acceleration of the vehicle, in particular a value or set of values from which the physically correct measurement of the actual acceleration can (at least approximately) be obtained, in particular without having to resort to other measurements. The actual acceleration as detected by the detector may in particular comprise a numerical value or values, in particular a set of two, three or more values (e.g. one value for each Cartesian direction), in particular a vector or information representing a vector. In particular, the actual acceleration as detected by the detector would be such that a computing device can process it.

Also, as used herein, the term "acceleration" or "actual acceleration" is not intended to relate to acceleration due to (Earth's) gravity. For example, where the present specification (which includes the claims) refers to "a state of a vehicle without (actual) acceleration" or "in the absence of any acceleration" or similar, this is intended to be interpreted as "a state of a vehicle without (actual) acceleration other than Earth's gravity".

Similarly, the term "change of orientation" as detected by the detector does not need to be a value which (directly) provides the correct measurement of the change of orientation as expressed in (correct) physical units, such as a directed angular value. Instead, the term "change of orientation" can, in principle, mean any information which (at least approximately) characterises the change of orientation, in particular (at least approximately) uniquely characterises the change of orientation, in particular a value or set of values from which the physically correct measurement of the change of orientation can (at least approximately) be obtained, in particular without having to resort to other measurements. The change of orientation as detected by the detector may in particular comprise a numerical value or values, in particular a set of two, three or more values (e.g. one value for each Cartesian direction), in particular a vector or information representing a vector. In particular, the change of orientation as detected by the detector would be such that a computing device can process it.

Suitable detectors for detecting the actual acceleration of the vehicle and/or the change of orientation are known in the art and include, for example, accelerometers, gyroscope sensors and magnetometer sensors, or combinations of these.

In the sense of the invention, a "processing unit" is preferably intended to be understood to mean any electrical component or device which can receive a detection output from the detector and generate a control signal based thereon which can be used by the sound system comprising a plurality of acoustic output devices. The processing unit can either (substantially) transparently pass the detection output to the sound system if the sound system or the acoustic output devices can be controlled directly by the detection output, or it may process the detection output and generate a control signal which is (substantially) different from the detection output. The processing unit may in particular comprise a microprocessor. The processing unit of the first aspect of the invention may, for example, comprise an onboard computer of the vehicle, or a component thereof.

In one example, the acoustic output devices that are part of the sound system comprise loudspeakers of the vehicle, in particular loudspeakers which are permanently installed in the vehicle. Together, they may form a surround sound system. Pursuant to the invention, surround sound systems installed in the vehicle may comprise as few as three loudspeakers, but preferably more, for example at least 4, 5, 6, 7, 8, 9 or 10 loudspeakers. They may have (significantly) more than ten loudspeakers, for example at least 15, 20, 25 or 30.

Other examples of acoustic output devices as part of the sound system will be described below. Whilst the audible sound needs to be appreciable by a person, it does not necessarily need to be particularly loud. In particular, it may be output in addition to other sounds that can be heard in the vehicle, and the (average and/or peak) volume of the audible sound may be lower than the (average and/or peak) volume of such other sounds. The audible sound may be output by acoustic output devices which also output such other sounds, or it may be output by a different set of acoustic output devices. Also, the audible sound may be a sound which, in the absence of any actual acceleration or change of orientation of the vehicle, would not be output by the sound system, or it may be a modification of a sound which, even in the absence of any actual acceleration or change of orientation of the vehicle, would be output by the sound system.

Given that, according to the first aspect,
- the control signal is based on the detection output of the detected actual acceleration or change of orientation, and
- the control signal is arranged to cause the spatial audio pattern of the sound system to be modified,
the spatial audio pattern and/or the audible sound to be output by the sound system (and/or the modification of the spatial audio pattern and/or of the audible sound, in particular when compared with the case when no actual acceleration and no change of orientation has been detected) will be (perceived to be) indicative of the actual acceleration or the change of orientation. When perceived by a person travelling in the vehicle, this may provide the person with a (direct) connection or correlation between, on the one hand, the acceleration or the change of orientation of the vehicle and, on the other hand, the audible sound, which may help to alleviate the effects of motion sickness.

In the sense of the invention, a "spatial audio pattern" is preferably intended to be understood to mean a spatial pattern which the audio output of the sound system forms, in particular in terms of from which direction any audio output is perceived to be coming from, in particular at what volume. The spatial audio pattern may also give a user a perception of depth, or distance, i.e. the (perceived) distance of an audio source to the user.

A reference spatial audio pattern may be regarded as a default spatial audio pattern for audio content, i.e. when the vehicle is stationary or is moving in a straight line at a constant speed. The reference spatial audio pattern may in particular be a spatial audio pattern which is symmetric with respect to a plane which is oriented vertically and runs lengthways, in particular centrally, along the vehicle. A reference spatial audio pattern may or may not have (substantial) circular symmetry around a vertical axis and may or may not have (substantial) spherical symmetry. In practice, however, the reference spatial audio pattern will not be precisely symmetric and may even differ substantially from a symmetric pattern. Nevertheless, where a reference spatial audio pattern is graphically represented in the present application, this will be shown as a circle.

A spatial audio pattern may be defined with respect to the vehicle in particular if the sound system comprises loudspeakers installed in the vehicle, or with respect to a user, in particular if the sound system comprises a portable device.

The system can be built into the vehicle or may form part of the vehicle. However, the system can also be provided on its own and, for example, be supplied to vehicle manufacturers so that the system may be built into vehicles.

In a second aspect, the present invention provides a vehicle comprising the system according to the first aspect, or any embodiment thereof.

In a third aspect, the present invention provides a method of providing an indication of an acceleration of a vehicle or a change of orientation of the vehicle with respect to the environment of the vehicle, the method comprising:
detecting an actual acceleration of the vehicle or a change of orientation of the vehicle and providing a detection output based thereon;
processing the detection output and generating a control signal based thereon; and outputting an audible sound as a function of the control signal via a sound system comprising a plurality of acoustic output devices,
wherein a spatial audio pattern of the sound system is modified when compared with a reference spatial audio pattern applicable when no actual acceleration of the vehicle and no change of orientation of the vehicle has been detected.

In a fourth aspect, the present invention provides a computer program product comprising a program code which is stored on a computer readable medium, for carrying out the method in accordance with the third aspect, or any of its steps or combination of steps, or any embodiments thereof.

The computer program may in particular be stored on a non-volatile data carrier. Preferably, this is a data carrier in the form of an optical data carrier or a flash memory module. This may be advantageous if the computer program as such is to be traded independently of a processor platform on which the one or more programs are to be executed. In a different implementation, the computer program may be provided as a file or a group of files on one or more data processing units, in particular on a server, and can be downloaded via a data connection, for example the Internet, or a dedicated data connection, such as for example a proprietary or a local network. In addition, the computer program may comprise a plurality of interacting, individual program modules.

In some embodiments, the computer program may be updatable and configurable, in particular in a wireless manner, for example by a user or manufacturer. Likewise, the way in which the spatial audio pattern of the sound system is to be modified when compared with the reference spatial audio pattern may be updatable and configurable in some embodiments, in particular in a wireless manner, for example by a user or manufacturer.

Some embodiments of the first to fourth aspects of the present invention will now be described.

In some embodiments of the first aspect, the at least one detector is configured to detect the change of orientation over a specified period of time so as to derive a change from a first orientation to a second orientation in said period of time, thereby deriving a measure of the change of orientation.

Similarly, in some embodiments of the third aspect, the change of orientation is detected over a specified period of time so as to derive a change from a first orientation to a second orientation in said period of time, thereby deriving a measure of the change of orientation.

In this way, the measure of the change of orientation indicates the amount of change of orientation per unit of time. In other words, the faster the change of orientation takes place, the greater the measure of the change of orientation will be.

In some embodiments of the first aspect, the change of orientation from the first orientation to the second orientation in said period of time represents a rotation in a first rotational sense, and when the at least one detector detects said change of orientation, the control signal is arranged to cause the spatial audio pattern of the sound system to be modified by rotating the spatial audio pattern of the sound system with respect to the vehicle at least substantially in the first rotational sense.

Similarly, in some embodiments of the third aspect, the change of orientation from the first orientation to the second orientation in said period of time represents a rotation in a first rotational sense, and
when said change of orientation is being detected, the control signal causes the spatial audio pattern of the sound system to be modified by rotating the spatial audio pattern of the sound system with respect to the vehicle at least substantially in the first rotational sense.

A rotation of the spatial audio pattern may provide a user with a particularly good indication of the change of orientation, in particular if the rotational sense of the rotation of the spatial audio pattern is the same as that of the change of orientation of the vehicle.

In connection with these embodiments, it is to be noted that the spatial audio pattern does not merely follow the change of orientation of the vehicle, i.e. does not remain stationary with respect to the vehicle. Instead, the spatial audio pattern is rotated with respect to the vehicle, in the same rotational sense as the change of orientation.

A simple example: A reference spatial audio pattern (e.g. when the vehicle is stationary or is travelling in a straight line at constant speed) may be such that any audio output is perceived to come predominantly from a front loudspeaker. The vehicle then follows a curve towards the right, i.e. changes its orientation towards the right. In that case, the spatial audio pattern will be rotated such that the audio output is perceived to come predominantly from a loudspeaker towards the right side of the vehicle, or perhaps from the front and right of the vehicle.

In some embodiments of the first aspect, when the at least one detector detects said change of orientation, the control signal is further arranged to cause the spatial audio pattern of the sound system to be distorted when compared with a situation when no change of orientation has been detected.

Similarly, in some embodiments of the third aspect, when said change of orientation is being detected, the spatial audio pattern of the sound system is distorted when compared with a situation when no change of orientation has been detected.

Preferably, the distortion of the spatial audio pattern comprises an affine transformation.

The distortion may be performed instead of a rotation, or in addition to a rotation of the spatial audio pattern. A combined rotation and distortion may provide a user with a particularly good indication of a change of orientation, thereby alleviating the effects of motion sickness.

A distortion may in particular change a perceived distance of one or more acoustic output devices, for example such that one or more of the acoustic output devices of the sound system will be perceived by a user to be closer (for example by increasing their volume) whilst other acoustic output devices of the sound system will be perceived by a user to be further away (for example by reducing their volume).

Considering again the above example, the reference spatial audio pattern could be such that any audio output is perceived to come predominantly from a front loudspeaker, at a distance of 3 metres. When the vehicle then follows the curve towards the right, i.e. changes its orientation towards the right, the spatial audio pattern may be distorted (and rotated) such that the audio output is perceived to come predominantly from a loudspeaker towards the right side of the vehicle, or perhaps from the front and right of the vehicle, at a distance of only 2 metres.

In another example, the reference spatial audio pattern could be such that any audio output is perceived to come equally from all sides. As the vehicle starts following the curve towards the right, i.e. starts changing its orientation towards the right, the spatial audio pattern may be distorted (and rotated) such that the audio output is perceived to come more from a loudspeaker towards the right side of the vehicle, or perhaps from the front and right of the vehicle, whilst audio output is also perceived to come from a loudspeaker towards the left side of the vehicle, or perhaps from the rear and left of the vehicle, whereby the volume from the loudspeaker towards the right (or front and right) may be greater (i.e. perceived to be closer) than the volume from the loudspeakers towards the left (or rear and left).

In some embodiments of the first and/or third aspects, the extent of the rotation or distortion of the spatial audio pattern is related to the change of orientation per unit of time via one of a monotone function, a strictly monotone function, a monotonically increasing function, a strictly increasing function, a linear function, a function which increases at a smaller than linear rate or a function which increases at a greater than linear rate.

In these embodiments, the rotation or distortion of the spatial audio pattern may therefore be greater for a faster change of orientation than for a slower change of orientation.

Similarly, in some embodiments of the first aspect, when the at least one detector detects said acceleration, the control signal is arranged to cause the spatial audio pattern of the sound system to be modified by:
rotating the spatial audio pattern of the sound system with respect to the vehicle and/or
distorting the spatial audio pattern of the sound system when compared with a situation when no acceleration has been detected.

Likewise, in some embodiments of the third aspect, when said acceleration is being detected, the spatial audio pattern of the sound system is modified by:
rotating the spatial audio pattern of the sound system with respect to the vehicle and/or
distorting the spatial audio pattern of the sound system when compared with a situation when no acceleration has been detected.

The rotation or distortion of the spatial audio pattern in the case of a detected acceleration may be analogous to the rotation or distortion of the spatial audio pattern in the case of a detected change of orientation.

For example, in the case of a (positive) longitudinal acceleration, the spatial audio pattern might be rotated such that the front of the spatial audio pattern is raised while the rear of the spatial audio pattern is lowered - reminiscent of the front of a car body typically being raised slightly and the rear of the car body typically being lowered slightly in the case of (positive) longitudinal acceleration, an effect which will be more noticeable in the case of relatively strong acceleration. Whilst therefore, in connection with a typical car, a longitudinal acceleration may be accompanied by a (slight) rotation of the car body about a horizontal axis of rotation transverse to the direction of travel, this need not always be the case. In particular, this will depend on the location (in particular its height) of the centre of mass of the vehicle in relation to the location of the axles of the vehicle (in particular their height).

It will be appreciated that a change of orientation of a vehicle would normally also involve a (lateral) acceleration. However, embodiments are conceivable according to which a change of orientation will be treated separately (and differently) from a longitudinal acceleration. For example, in some embodiments, a longitudinal acceleration (whether or not accompanied by a (slight) rotation of the car body about a horizontal axis of rotation transverse to the direction of travel) might not cause a spatial audio pattern of the sound system to be modified, while a change of orientation of the vehicle (about a vertical axis), e.g. when passing through a curve, might cause the spatial audio pattern to be modified in one or more of the ways described above, or vice versa.

In some embodiments, the acceleration comprises any one, or all, or any subset, of longitudinal acceleration, vertical acceleration, lateral acceleration, a right curve, a left curve, or road unevenness.

In some embodiments of the first and/or third aspects, the extent of the rotation or distortion of the spatial audio pattern is related to a measure of the acceleration via one of a monotone function, a strictly monotone function, a monotonically increasing function, a strictly increasing function, a linear function, a function which increases at a smaller than linear rate or a function which increases at a greater than linear rate.

In these embodiments, the rotation or distortion of the spatial audio pattern may therefore be greater for a stronger actual acceleration than for a weaker actual acceleration.

In some embodiments of the first aspect, the system is arranged to cause the spatial audio pattern to return to, or towards, the reference spatial audio pattern
- in the absence of any actual acceleration of the vehicle and/or
- in the absence of any change of orientation of the vehicle and/or
- on the expiry of a specified period of time
after the spatial audio pattern has been modified.

Similarly, in some embodiments of the third aspect, the spatial audio pattern is caused to return to, or towards, the reference spatial audio pattern
- in the absence of any actual acceleration of the vehicle and/or
- in the absence of any change of orientation of the vehicle and/or
- on the expiry of a specified period of time
after the spatial audio pattern has been modified.

In these embodiments, the way in which the modification of the spatial audio pattern reduces may, for example, be analogous to the way in which the modification of the spatial audio pattern appeared on detection of an actual acceleration or change of orientation. However, other ways of reducing the modification of the spatial audio pattern are possible. For example, on detection of an actual acceleration or change of orientation, the modification of the spatial audio pattern may be particularly pronounced or effectively "overshoot" a modification which would be encountered in a steady state situation - i.e. some time after the onset of actual acceleration or change of orientation and while there still is actual acceleration or a change of orientation - and then settle into the pattern of the steady state situation. This may give a user the impression that the modification of the spatial audio pattern has a character that is similar to an elastic band and/or that of an inert mass, which may be particularly effective in reducing the effects of motion sickness.

In this context it is to be noted that the term "steady state situation", as used herein, does not refer to a situation in which there is no acceleration and no change of orientation. Instead, the term "steady state situation" refers to a state some time (e.g. a predetermined or configurable period of time) after the onset of actual acceleration or change of orientation. The steady state situation can in particular be regarded as a condition when the actual acceleration and change of orientation per unit of time is constant (and has been constant for some time) and at least one of the actual acceleration and change of orientation per unit of time is non-zero. In terms of the modification of the spatial audio pattern, the steady state situation can also be regarded as a condition which the spatial audio pattern would assume, based on the detected actual acceleration and change of orientation per unit of time, if there was no overshoot.

The speed with which the modification of the spatial audio pattern appears or is reduced or disappears may be a function of the detected actual acceleration or the detected change of orientation per unit of time, and/or a time derivative thereof. For example, for a sudden change in acceleration, or if a change of orientation starts suddenly, the overshoot may be greater and may also appear, as well as disappear, faster than in the case of a less sudden change in acceleration or a less sudden start of change of orientation (even if the detected acceleration or change of orientation per unit of time is the same).

Parameters of the modification of the spatial audio pattern, in particular the magnitude or the speed of appearing and/or reducing and/or disappearing of the modification or of any overshoot may be predetermined or configurable, in particular in a wireless manner, for example by a user or manufacturer.

In some embodiments of the first and/or third aspects, the sound system comprises a portable device, in particular a portable device that is proprietary to the vehicle or a personal device.

The portable device may be proprietary to the vehicle in the sense that it may have proprietary connectors which (typically) only fit a corresponding connector provided in the vehicle, for example a connector of a holder or cradle provided in the vehicle, or the communication protocols used by the portable device need to match those used by the vehicle, so that a generic device (such as a personal mobile device) might not be able to communicate with the vehicle (or with a holder or cradle thereof).

Whether the acoustic output device is proprietary to the vehicle or is a (generic) personal device, it may comprise headphones or a headset, in particular with surround sound function. In the case of a personal device, any headphones or headsets may be connected for example to a smartphone, a laptop computer, a tablet computer. Whether the acoustic output device is proprietary to the vehicle or is a (generic) personal device, it may be connected to the vehicle in a wired or wireless manner, for example via Bluetooth^{®} or similar.

In some embodiments of the first aspect in which the sound system comprises a portable device, the processing unit is arranged to cause the spatial audio pattern to be modified in such a way that a user of the portable device perceives the spatial audio pattern as having been modified in a substantially consistent manner, irrespective of the location and/or orientation of the personal device relative to the vehicle.

Similarly, in some embodiments of the third aspect in which the sound system comprises a portable device, the spatial audio pattern is caused to be modified in such a way that a user of the portable device perceives the spatial audio pattern as having been modified in a substantially consistent manner, irrespective of the location and/or orientation of the personal device relative to the vehicle.

These embodiments are based on the following recognition by the inventor: If an audible sound is output in order to reduce the effects of motion sickness, this can be particularly effective if the way in which the spatial audio pattern of that audible sound is modified is consistent with respect to the vehicle, irrespective of the location and/or orientation of the personal device relative to the vehicle. This will again be illustrated with reference to the above example, where the vehicle passes through a curve to the right and the spatial audio pattern is supposed to be modified in such a way that the audible sound predominantly comes from the right. We assume that a user is sitting on the front right-hand seat of the vehicle, is facing forward (in the longitudinal direction of the vehicle) and is wearing a headset with surround sound function. The modification of the spatial audio pattern (of the headset) would be such that the volume from the right-hand portion of the headset will be greater than from the left-hand portion of the headset. Now, if, for example, the user turns their head 90° to the left, the right-hand side of the vehicle would now correspond to the rear of the headset, and accordingly, in this situation, the modification of the spatial audio pattern (of the headset) would be such that the volume from the rear of the headsets will be greater than from the front of the headset.

In order to ensure that a user of the portable device can perceive the spatial audio pattern as having been modified in a substantially consistent manner (with respect to the vehicle), the system can take the position and/or orientation of the portable device - in this example the headset of the user - into account. To this end, in some embodiments, the system comprises an interface for receiving information regarding the position and/or orientation of the portable device relative to the vehicle, and the processing unit is arranged to generate the control signal as a function of this information. Using this control signal, the portable device is then "instructed" accordingly, i.e. such that the user can perceive the spatial audio pattern as having been modified in a substantially consistent manner with respect to the vehicle, irrespective of the location and/or orientation of the personal device relative to the vehicle.

In such embodiments, the portable device could itself provide the information regarding the position and/or orientation of the portable device relative to the vehicle, for example using gyroscopes of the portable device and/or positional information obtained with the aid of a (satellite-based) positioning system such as GPS. This information can then be processed by the system, in particular the processing unit. In particular, the system/processing unit can compare this information with information regarding the position and/or orientation of the vehicle so as to determine the position and/or orientation of the portable device relative to the vehicle. In addition, or as an alternative, the vehicle could obtain the information regarding the position and/or orientation of the portable device relative to the vehicle using e.g. one or more cameras or other detectors (installed in the vehicle) arranged to detect the position and/or orientation of the portable device.

The interface for receiving information regarding the position and/or orientation of the portable device relative to the vehicle may be wired or wireless. A wired interface may, for example, be an electrical connector for connection to the portable device. If the portable device is hard-wired to the processing unit, the interface may be regarded as a point along the connection between the processing unit and the portable device.

In alternative embodiments, the processing unit provides, to the portable device, information regarding the way in which the spatial audio pattern is supposed to be modified (with respect to the vehicle). This information is provided to the portable device without the processing unit necessarily being aware of the position and/or orientation of the portable device relative to the vehicle. Using this information, the portable device can then determine, on the basis of its own knowledge of its own position and/or orientation, how to modify the spatial audio pattern so that the user can perceive the spatial audio pattern as having been modified in a substantially consistent manner relative to the vehicle, or such that the audible sound is able to be perceived by the user as coming (predominantly) from the "correct" direction/position.

In the sense of the invention, the expressions "correct direction/position" and "substantially consistent direction relative to the vehicle" and similar are preferably intended to be understood in such a way that an angular difference between, on the one hand, the direction which the audible sound is supposed to be perceived to originate from, and, on the other hand, the direction from which the audible sound will be perceived, by a user, to be coming from, is at most, or less than, one of: 90°, 80°, 70°, 60°, 50°, 45°, 40°, 30°, 20° or 10°.

In some embodiments of the first and/or third aspects, the plurality of acoustic output devices comprises at least one shaker, preferably a plurality of shakers.

Such shakers can be constructed similar to a loudspeaker (and can therefore also be regarded as acoustic output devices), but they do not necessarily need to produce an audible sound, in particular an audible sound that can be perceived by a human. Instead (or in addition), their main purpose is to cause a vibration or "shake" that can be felt by a human. Such shakers may for example be attached to, or built into, a vehicle seat, for example one shaker or a row of shakers towards the right-hand side of the seat and one shaker or a row of shakers towards the left-hand side of the seat. The modification of the spatial audio pattern may then involve activating the shaker(s) on one side of the seat and not on the other side, or activating the shaker(s) on one side of the seat more than on the other side.

Sound systems which combine surround sound with one or more shakers are also referred to as "4D surround sound".

In any, some or all of the above embodiments, the audible sound may be an audible sound arranged to be generated by the vehicle
- to indicate that the vehicle is operational and/or
- to indicate that the vehicle is moving and/or
- to resemble the sound of an internal combustion engine.

This may be particularly useful in connection with electric vehicles since they tend to be quieter than vehicles with an internal combustion engine, in particular when they are stationary. The audible sound may therefore be a (subtle) sound that is (artificially) generated or added to give the person an indication of the condition of the vehicle (operational/moving etc.). Such a sound may therefore be generated and output regardless of whether or not the vehicle undergoes any acceleration or changes its orientation. The latter case may occur for example after the person has put the vehicle into an "activated state", e.g. by inserting a key, key card or similar into an appropriate receptacle of the vehicle or has pressed a start button or similar and while the vehicle remains stationary. Likewise, a condition without actual acceleration and change of orientation can be a case where the vehicle is moving in a straight line at a constant speed.

An audible sound of the type described above may however also be generated and output in connection with a vehicle which is equipped with an internal combustion engine, for example in a vehicle with noise cancellation function, where the noise generated by the engine might not (easily) be heard within the vehicle.

In the embodiments described above, the spatial audio pattern in accordance with which the audible sound is output is then modified when an actual acceleration and/or change of orientation has been, or is being, detected.

However, in any, some or all embodiments, the audible sound is output regardless of whether the vehicle is operational and/or moving and is not intended to resemble the sound of an internal combustion engine but may be a sound generated e.g. for entertainment or information purposes (e.g. music, news etc.) and may therefore be media content that a person in the vehicle happens to be listening to. Again, the spatial audio pattern in accordance with which such audible sound is output is then modified when an actual acceleration and/or change of orientation has been, or is being, detected.

In yet other embodiments, the audible sound is an audible sound that is only output when an actual acceleration and/or change of orientation has been, or is being, detected, and the spatial audio pattern in accordance with which such audible sound is output is then modified accordingly.

The terms "first", "second", "third" and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Where the term "comprising" or "including" is used in the present description and claims, this does not exclude other elements or steps. Where an indefinite or definite article is used when referring to a singular noun, e.g. "a", "an" or "the", this includes a plural of that noun unless something else is specifically stated.

Further, unless expressly stated to the contrary, "or" refers to an inclusive "or" and not to an exclusive "or". For example, a condition "A or B" is satisfied by any one of the following: A is true (or present) and B is false (or not present), A is false (or not present) and B is true (or present), and both A and B are true (or present).

All connections mentioned in the present specification may be wired or wireless unless this is explicitly excluded or technically impossible. The term "wired connection" encompasses not only connections established by, or using, a (metallic) wire, but also optical connections, preferably also any other type of physical connection allowing for the transmission of information.

Aspects and embodiments of the invention described or claimed herein can be combined with each other, and embodiments described in connection with one aspect of the invention can be combined with other aspects of the invention, unless such a combination is explicitly excluded or technically impossible.

Further advantages, features and applications of the present invention are provided in the following detailed description and the appended figures, wherein:
- **Fig. 1**: schematically shows a plan view of a vehicle according to an embodiment of the present invention.
- **Fig. 2**: shows a flow chart illustrating a method according to an embodiment of the present invention.
- **Fig. 3**: schematically shows a plan view of a vehicle travelling on a straight stretch of road, according to an embodiment of the present invention.
- **Fig. 4**: schematically shows a plan view of a vehicle travelling on a curved stretch of road, according to an embodiment of the present invention.
- **Fig. 5**: schematically shows a side view of an accelerating vehicle according to an embodiment of the present invention.
- **Fig. 6**: schematically shows a side view of a decelerating vehicle according to an embodiment of the present invention.
- **Fig. 7**: schematically shows a diagram in which the acceleration of a vehicle is plotted over a period of time, according to an embodiment of the present invention.
- **Fig. 8**: schematically shows a diagram in which a measure of a modification of a spatial audio pattern is plotted over a period of time, according to an embodiment of the present invention.
- **Fig. 9**: schematically shows a top view of the head of a person wearing headphones, in a first orientation, according to an embodiment of the present invention.
- **Fig. 10**: schematically shows a top view of the head of the person from Fig. 9, in a second orientation, according to an embodiment of the present invention.

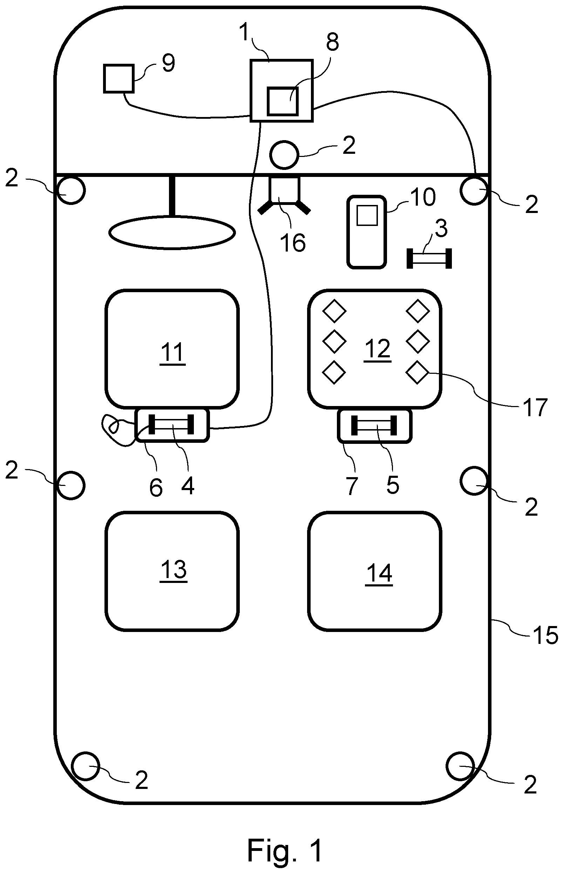

**Fig. 1** schematically shows a plan view of a vehicle 15 according to an embodiment of the present invention. The vehicle 15 is shown, by way of example, as a left-hand drive car, with two front seats 11, 12, two rear seats 13, 14 and a steering wheel (not labelled). The front of the vehicle is at the top of Fig. 1.

Vehicle 15 is equipped with a processing unit 1. Processing unit 1 may comprise, or form part of, an onboard computer of vehicle 15.

Processing unit 1 is connected to several loudspeakers 2 which are distributed at locations in the vehicle 15 and may be substantially permanently installed in vehicle 15. Together, the loudspeakers 2 form a (surround) sound system. In the example shown in Fig. 1, there are seven such loudspeakers 2. Only one (wired) connection between processing unit 1 and one of the loudspeakers 2 (right-hand side, towards the front of the vehicle 15) is shown. The other loudspeakers 2 may be connected in like manner. The connection(s) may be wired or wireless. More, or fewer, than seven loudspeakers 2 may be provided. For a surround sound effect, at least three loudspeakers 2 may be necessary, although it is preferred that vehicle 15 is equipped with (significantly) more than three loudspeakers, for example 30 or more. Loudspeakers 2 may all be positioned at the same height within the vehicle 15, or at different heights, in which case a user may perceive the output from the loudspeakers 2 as coming not only from locations within one (horizontal) plane but also from locations above and/or below.

Processing unit 1 is also connected to one or more detectors 9 of a type that is able to detect a current, actual acceleration and/or change of orientation of vehicle 15. Whilst only one detector 9 is shown in Fig. 1, vehicle 15 may be equipped with several detectors, from which a current, actual acceleration and/or change of orientation of vehicle 15 can be derived. Detector(s) 9 may, for example, comprise an accelerometer, in particular a 3-axis accelerometer, a gyroscope, a magnetometer and/or a GPS receiver.

Additionally, processing unit 1 is connected to one or more portable devices. Each of these also constitutes a sound system comprising a plurality of acoustic output devices, e.g. several speakers, preferably having surround sound capabilities. Fig. 1 illustrates three such portable devices 3, 4, 5. These will now be explained.

Portable device 3 is a set of personal headphones (or a headset). The connection between headphones 3 and processing unit 1 may be indirect, for example via a personal device 10 such as a smartphone, laptop or tablet computer or similar, or direct. Personal device 10 may be connected to vehicle 15, in particular to processing unit 1, in a wired or wireless manner, for example via Bluetooth^{®} or similar. Headphones 3 may also be connected in a wired or wireless manner, for example via Bluetooth^{®} or similar, to processing unit 1 and/or to personal device 10. Portable device 3 and/or personal device 10 may be generic, in the sense that they can be used not only with vehicle 15 but also for other purposes. Accordingly, portable device 3 - a generic headset or headphones - can also be regarded as a personal device.

Portable device 4 is proprietary to vehicle 15. In the example shown, it is held by, placed upon, or (removably) attached to a cradle or holder 6, which may be (substantially permanently) installed in vehicle 15, for example attached to the back of seat 11 or the headrest of seat 11, and may form part of a rear seat entertainment (RSE) system. Cradle 6 is connected to processing unit 1 by a wired connection. Portable device 4 is also connected to cradle 6 by a wired connection. Portable device 4 may comprise headphones or a headset and may have a surround sound function.

Portable device 5 and cradle/holder 7 may substantially correspond to portable device 4 and cradle/holder 6, except that these are not connected by a wired connection to processing unit 1, i.e. there is neither a wired connection between processing unit 1 and cradle 7, nor between cradle 7 and portable device 5. Portable device 5 may communicate with cradle 7, or directly with processing unit 1, in a wireless manner. Cradle 7 may also communicate with processing unit 1 in a wireless manner, or may not communicate with processing unit 1 at all and may simply be a holder for (mechanically) accommodating portable device 5 and/or serve as a charging station for portable device 5.

Variations of portable devices 4, 5 and cradles/holders 6, 7 are also possible, for example such that one or both of the portable devices 4, 5 are connected to a respective cradle 6, 7 in a wireless manner whilst the respective cradle(s) 6, 7 is/are connected to processing unit 1 by a wired connection. Alternatively, portable device(s) 4, 5 may be connected to the respective cradle(s) 6, 7 by a wired connection whilst the respective cradle(s) 6, 7 is/are connected to processing unit 1 in a wireless manner.

Vehicle 15 is also equipped with one or more shakers 17 (sometimes also referred to as "exciters"), which may form part of the sound system - even though shakers 17 may not necessarily produce a sound that is audible (to a human). A shaker can for example be implemented by a sub-woofer, but other implementations producing a vibration (or "haptic feedback") are also known in the art. Shakers 17 can be attached to, or integrated into, seats 11-14 of vehicle 15, although Fig. 1 only shows seat 12 as being equipped with shakers 17. As shown in Fig. 1, seat 12 is equipped with an array of shakers or shaker elements, for example two rows of shakers 17, one row towards the left-hand side of seat 12 and one row towards the right-hand side of seat 12. Other configurations of providing shakers in the seat are possible, including configurations in which shakers 17 are attached to, or integrated into, the back rest and/or headrest of seat 12 and/or under the lap of a person on the seat.

Processing unit 1 may have one or more wireless interfaces 8 for communicating with any one, some or all of loudspeakers 2, personal device 10, portable devices 3, 4, 5, detector 9 and/or shakers 17. Signals may be sent between processing unit 1 and portable devices 3, 4, 5 via their respective connections, if applicable via cradles 6, 7.

In addition or as an alternative, processing unit 1 may comprise a wired interface, for example an electrical connector for a cable-based connection with any, some or all of the other devices mentioned above. If these devices are hard-wired to processing unit 1, then the interface may be regarded as a point along the connection between these devices and processing unit 1. A wired connection can also be an indirect wired connection, for example such that cradles 6, 7 are connected to processing unit 1 via a first wired connection (hard-wired or using a removable cable with one or more connectors), and portable devices 4, 5 are connected to their respective cradle 6, 7 via a second wired connection (hard-wired or using a removable cable with one or more connectors, for example plugged into an AUX socket of the respective cradle).

In some embodiments, not all of the devices are present or connected, or the system of certain embodiments of the invention may comprise only some of the devices illustrated in Fig. 1. For example, embodiments are possible where the system comprises only the processing unit 1, detector 9 and a sound system comprising at least two loudspeakers 2 or one of the portable devices 3-5.

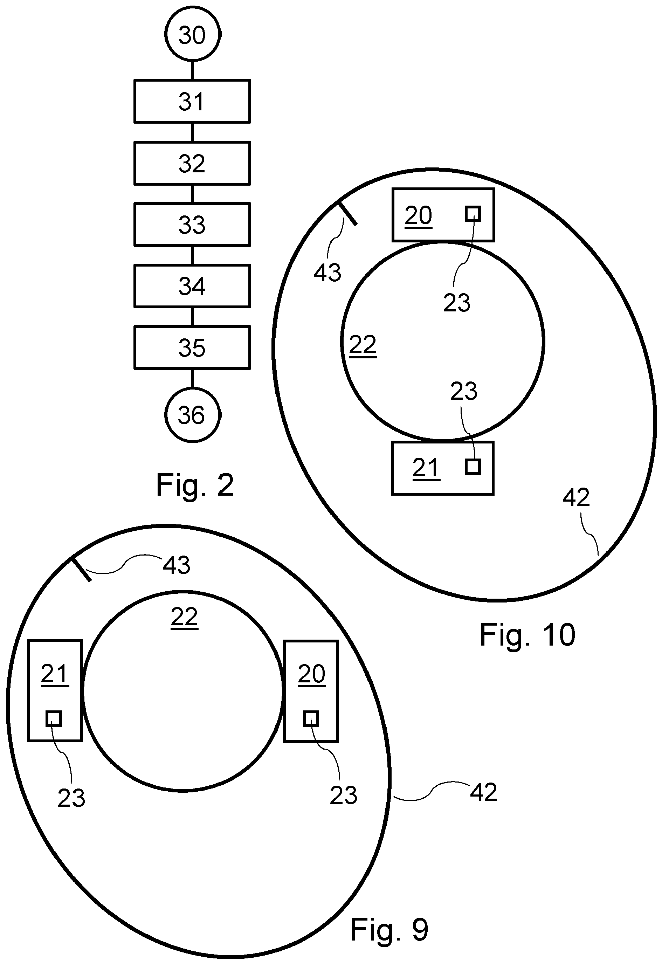

A method of operation of a system in accordance with the present invention will now be described with continued reference to Fig. 1 and further with reference to Fig. 2.

**Fig. 2** shows a flow chart illustrating a method according to an embodiment of the present invention.

After the start (30) of the method, the detector 9 detects (31) an actual (current) acceleration of the vehicle 15 and/or a change of orientation of vehicle 15 with respect to the environment of vehicle 15 and provides (32) a detection output based thereon. The acceleration can be any one, or all, or any subset, of longitudinal acceleration, vertical acceleration, lateral acceleration, a right curve, a left curve, or road unevenness. Similarly, the change of orientation may be an (angular) change in any direction, in particular an angular change about a vertical axis (e.g. when vehicle 15 is passing through a curve) or an angular change about a horizontal axis transverse to the direction of travel (e.g. when vehicle 15 is accelerating or decelerating).

The detection output is then transmitted to processing unit 1, where the detection output is processed (33) or analysed. In particular, processing unit 1 may include circuitry or program components to amplify the detection output, or to distinguish between detection outputs associated with the different types of acceleration/change of orientation, and to generate (34) a control signal based on the detection output. The control signal is thus indicative of the acceleration/change of orientation of the vehicle 15.

One or more of the acoustic output devices 2-5 then receives the control signal and generates and outputs (35) an audible sound as a function of the control signal, whereby the spatial audio pattern of the sound system via which the audible sound is output is modified when compared with a reference spatial audio pattern applicable when no actual acceleration of the vehicle 15 and no change of orientation of the vehicle 15 has been detected. The audible sound (or the spatial audio pattern via which the audible sound is output) is thus indicative of the actual acceleration or the change of orientation of the vehicle 15. The user is thus given an audible indication of the current, actual acceleration and/or change of orientation of vehicle 15, which may reduce the effects of motion sickness. Once the audible sound has been output, the method may end (36), or alternatively may be repeated.

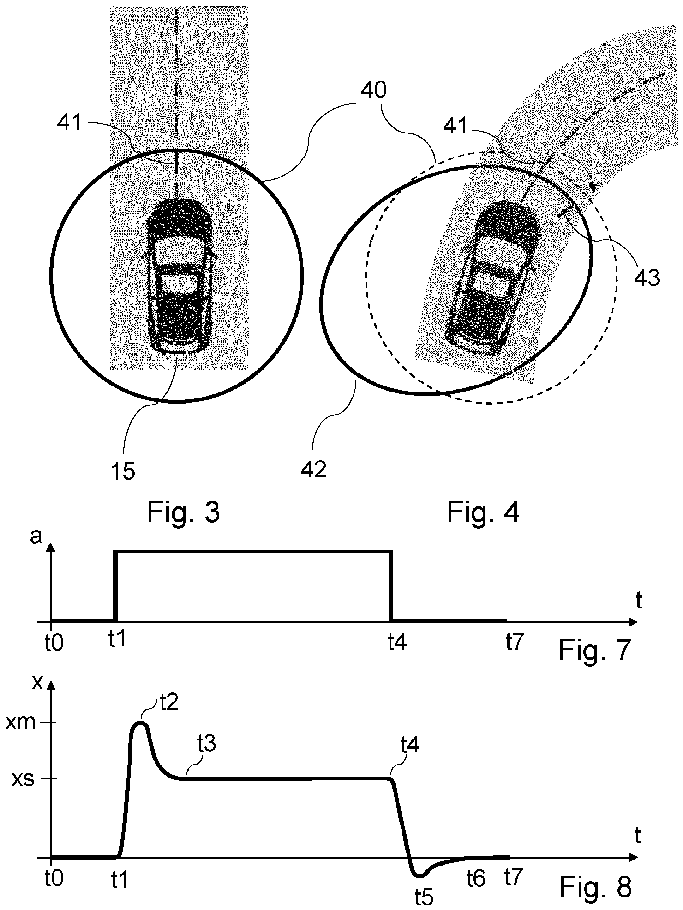

Some examples of how a spatial audio pattern of the sound system can be modified will now be described with reference to Figs. 3 to 6.

Fig. 3 schematically shows a plan view of a vehicle travelling on a straight stretch of road, according to an embodiment of the present invention. A circle 40 is shown in Fig. 3, which is intended to represent a reference spatial audio pattern of a sound system of vehicle 15. Accordingly, Fig. 3 assumes that vehicle 15 is neither accelerating nor decelerating nor that it is changing its orientation, i.e. vehicle 15 as shown in Fig. 3 may travel at a constant speed in a straight line. The spatial audio pattern 40 is symmetric with respect to a vertical mid-plane extending parallel to the direction of travel of vehicle 15. In the example shown, the spatial audio pattern 40 also has circular symmetry around a vertical axis of vehicle 15 (and may also have spherical symmetry).

Fig. 3 also shows an alignment marker 41 of spatial audio pattern 40, the function of which will become more apparent in connection with Fig. 4.

**Fig. 4** schematically shows a plan view of the vehicle of Fig. 3, which is now travelling on a curved stretch of road. The reference spatial audio pattern 40 is shown in a dashed line, together with the reference alignment marker 41. However, since vehicle 15 is now changing its orientation as it is passing through a curve, the spatial audio pattern has now been distorted and rotated to result in modified spatial audio pattern 42. Modified spatial audio pattern 42 is represented as an oval shape. The longest axis of this oval shape 42 is no longer aligned with a longitudinal axis of vehicle 15, i.e. spatial audio pattern 42 - or rather a front portion thereof - has been rotated to the right with respect to vehicle 15. Further, when compared with an oval representation of a spatial audio pattern whose centre coincides with the centre of vehicle 15, the modified spatial audio pattern 42 shown in Fig. 4 has been shifted towards the rear and left-hand side of vehicle 15, i.e. the oval shape of spatial audio pattern 42 has come closer to the front right-hand corner of vehicle 15, as indicated by (modified) alignment marker 43.

In Fig. 4, the regions where the line of the oval shape 42 has moved closer to the centre of the vehicle 15, i.e. where alignment marker 43 is located, are intended to represent a greater sound volume than regions where the line of the oval shape 42 has moved away from the centre of the vehicle 15, i.e. on the rear left-hand side of the oval shape 42, opposite the alignment marker 43. Given the greater volume of sound output from a direction towards the front right-hand side of vehicle 15, the audible sound output via the sound system in accordance with the modified spatial audio pattern 42 provides a user with a spatial indication of the direction in which the orientation of vehicle 15 is changing.

After vehicle 15 has passed through the curve shown in Fig. 4 and continues on a straight stretch of road (as shown in Fig. 3), the spatial audio pattern may revert to its reference pattern.

It will be appreciated that other ways of distorting and/or rotating the spatial output pattern are possible.

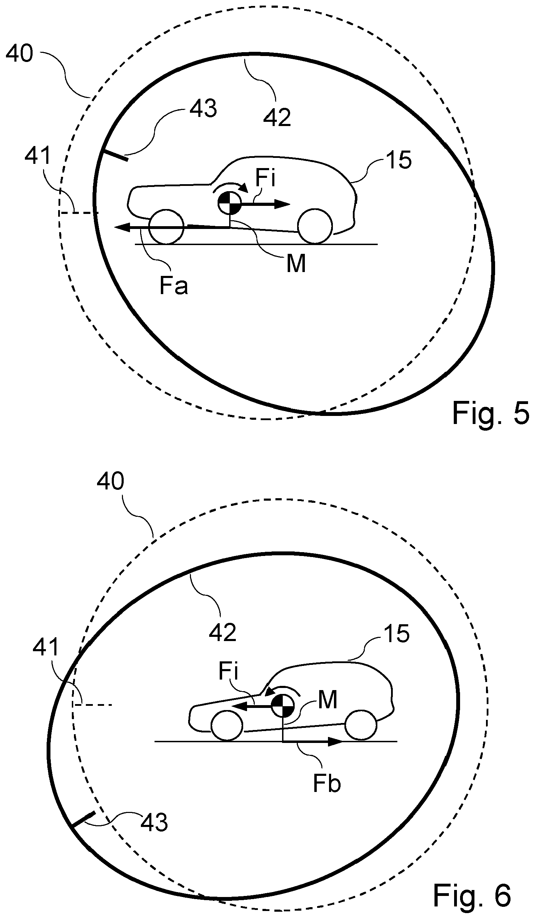

**Fig. 5** schematically shows a side view of an accelerating vehicle according to an embodiment of the present invention. A reference spatial audio pattern 40 is again shown in dashed line, together with its alignment marker 41. Similar to what has been explained with reference to Figs. 3 and 4, when vehicle 15 is accelerating, the spatial audio pattern is modified (rotated/distorted) to result in modified spatial audio pattern 42 with alignment marker 43.

Fig. 5 also indicates a position of a centre of mass (small circle with two black and two white quarter segments), as well as an accelerating force Fa and an inertial force Fi acting on vehicle 15. Given that the accelerating force Fa acts (in a forward direction) at a level of the centre of the wheels of vehicle 15 and the inertial force Fi acts (in a rearward direction) at a level of the centre of mass, which (as is typical for most vehicles) is at a higher level than the centre of the wheels, this offset results in a torque M rotating vehicle 15 slightly about a horizontal axis transverse to the direction of travel, i.e. the rear of vehicle 15 is lowered slightly and the front of vehicle 15 is raised slightly. The rotation of spatial audio pattern 42 is therefore consistent with the slight rotation of vehicle 15. However, even in the absence of any rotation of vehicle 15 (i.e. in a case of pure acceleration without rotation of vehicle 15, as might be observed if the centre of mass of vehicle 15 is at the same level as the centre of the wheels of vehicle 15), this embodiment envisages that the spatial audio pattern 42 is modified as shown in Fig. 5, as a result of the detected acceleration.

As shown in Fig. 5, the spatial audio pattern 42 is not only distorted into an oval shape and rotated, but also shifted. This shift has the effect that a portion of the oval shape in front of the vehicle 15 and at an elevated position with respect to vehicle 15 has moved closer to the centre of vehicle 15, i.e. a person travelling in vehicle 15 will perceive the sound volume from a direction corresponding to that elevated position at the front of vehicle 15 as being greater than if the spatial audio pattern had not shifted.

**Fig. 6** schematically shows a side view of the vehicle 15 of Fig. 5. However, in Fig. 6, vehicle 15 is decelerating (braking) so that this figure effectively shows the opposite of what is shown in Fig. 5. The inertial force Fi again acts at the level of the centre of mass (but now in a forward direction), and the braking force Fb now acts (in a rearward direction) at the level of the contact between the wheels and the road/ground. This offset results in a torque M rotating vehicle 15 slightly about a horizontal axis transverse to the direction of travel, whereby now the rear of vehicle 15 is raised slightly and the front of vehicle 15 is lowered slightly. The spatial audio pattern 42 is again rotated in a consistent manner with the slight rotation of vehicle 15.

As shown in Fig. 6, the spatial audio pattern 42 is not only distorted into an oval shape and rotated, but also shifted. In the case of the vehicle 15 decelerating, the oval shape 42 has now been shifted such that that a portion of the oval shape to the rear of vehicle 15 and at an elevated position with respect to vehicle 15 has moved closer to the centre of vehicle 15, i.e. a person travelling in vehicle 15 will perceive the sound volume from a direction corresponding to that elevated position at the rear of the vehicle 15 as being greater than if the spatial audio pattern had not shifted. Considering Figs. 5 and 6 in combination, the modification of the spatial audio pattern (or the shape representing the spatial audio pattern) in the case of vehicle 15 accelerating or decelerating could be described by the following three steps:
1. The spatial audio pattern is distorted (or stretched) generally in a direction corresponding to the acceleration/deceleration, i.e. horizontally in this example. In the case of longitudinal acceleration/deceleration, this distortion (or stretching) is applied in a longitudinal direction with respect to the vehicle.
2. The distorted spatial audio pattern is then shifted as if the shape representing the (distorted) spatial audio pattern was suspended as an inert mass with respect to the vehicle, for example in an elastic manner. For a longitudinal acceleration, the distorted spatial audio pattern would therefore shift in a forward direction, and for a longitudinal deceleration, the distorted spatial audio pattern would shift in a rearward direction.
3. The distorted and shifted spatial audio pattern is then rotated in a direction of rotation consistent with the (slight) rotation which a typical car would undergo when accelerating or decelerating (preferably regardless of whether or not the vehicle actually undergoes such a rotation). The centre of rotation of the distorted and shifted spatial audio pattern may for example correspond (approximately) to the centre of the vehicle.

In other implementations, the order of steps 2 and 3 could be reversed, or steps 2 and 3 could be performed simultaneously. Further, whilst the spatial audio patterns 40, 42 are shown as two-dimensional shapes in Figs. 5 and 6, it will be appreciated that the spatial audio pattern will normally be a three-dimensional shape. In the example of Figs. 5 and 6, the reference spatial audio pattern may therefore correspond to a sphere, which is then stretched into an ellipsoid.

A measure or degree of modification of the spatial audio pattern, in particular the degree of distortion, rotation and/or shift with respect to vehicle 15 can be made (purely) dependent on a measurement of the detected acceleration and/or rotation (per unit of time) of vehicle 15. However, other factors can be taken into account, an example of which will be described with reference to Figs. 7 and 8.

**Fig. 7** schematically shows a diagram in which the acceleration of a vehicle 15 is plotted over a period of time, according to an embodiment of the present invention, and **Fig. 8** schematically shows a diagram in which a measure of a modification of a spatial audio pattern is plotted over the same period of time as in Fig. 7, according to an embodiment of the present invention.

In the example illustrated in Fig. 7, vehicle 15 travels at constant speed between points in time t0 and t1, i.e. vehicle 15 is not undergoing any acceleration. From t1 to t4, vehicle 15 accelerates at a constant rate, after which (from t4 to t7) vehicle 15 continues at constant speed.

Fig. 8 illustrates the corresponding modification "x" of the spatial audio pattern according to one embodiment. Between t0 and t1, the spatial audio pattern of vehicle 15 corresponds to a reference spatial audio pattern, i.e. is not modified. From t1 or shortly thereafter, a modification of the spatial audio pattern takes place, for example by distorting, shifting and/or rotating as described with reference to Figs. 5 and 6. The modification x "overshoots" to reach a maximum value xm at point in time t2, some time after t1. This overshoot decays until, at a point in time t3, the modification has settled at a certain value xs between zero and the maximum value xm. The value xs can be regarded as a steady state value given that the acceleration remains constant, and the overshoot has already decayed (note that the explanation provided above in connection with the term "steady state situation" also applies, mutatis mutandis, to the term "steady state value"). The modification remains at this value xs until t4 or shortly thereafter, when it decreases, given the absence of any further acceleration. Again, the modification overshoots, in the sense that it does not simply decrease to zero but goes negative. In terms of the shape of the spatial audio pattern 42 illustrated in Fig. 5, this might mean that, after the end of the (positive) acceleration at t4, the modification briefly becomes as illustrated with reference to Fig. 6 - even though the vehicle 15 is not decelerating. This negative modification continues to reach an extreme (negative) value at t5 and then decays, similar to what has been described between points in time t2 and t3, until it reaches zero (i.e. the spatial audio pattern returns to the reference spatial audio pattern) at t6, some time after t5. The spatial audio pattern then remains in this state until t7, i.e. the modification of the spatial audio pattern remains at zero.

The overshoot illustrated in, and explained with reference to, Fig. 8 can again be regarded as a result of the spatial audio pattern (or the shape representing it) being suspended as an inert mass with respect to the vehicle, for example in an elastic manner. For example, at the start of the acceleration at t1, the modification does not immediately reach the steady-state value xs but instead may lag behind slightly, and in particular increases at a non-infinite rate. Further, the modification then increases beyond the steady-state value xs to reach the maximum value xm, etc.

It will be appreciated that Figs. 7 and 8 only illustrate one example. Various modifications are possible, in particular in terms of any one, some, or all, of the following characteristics:
- the amount of overshoot at t2
- the amount of overshoot at t5, which may be different from that at t2
- whether there is any overshoot at all at t2
- whether there is any overshoot at all at t5
- the amount of modification of the spatial audio pattern in relation to the amount of acceleration
- the rate of change at t1 and/or t4 (or the curvature at these points)
- how quickly the modification increases at the beginning of acceleration (or time taken to reach xm, which can be approximated as the time between t1 and t2)
- how quickly the (positive) overshoot decays (or time between t2 and t3)
- how quickly the modification decreases after the end of acceleration (or time between t4 and t5)
- how quickly the (negative) overshoot decays (or time between t5 and t6)

Parameters defining these or other characteristics may be predetermined or variable, in particular adjustable by a manufacturer or user, in particular in a wireless manner.

Whilst Figs. 7 and 8 have illustrated the modification of the spatial audio pattern in the case of (positive) longitudinal acceleration of vehicle 15, it will be appreciated that the principle illustrated with reference to Figs. 7 and 8 can also be applied to other types of acceleration, in particular vertical or lateral acceleration (whether positive or negative), as well as (any type of) rotation.

The embodiments described above can be used in cases where the sound system comprises loudspeakers of vehicle 15 (in particular loudspeakers 2 which are substantially permanently and fixedly installed in vehicle 15) and also in cases where the sound system comprises a portable device such as portable devices 3, 4 and 5. A further embodiment will now be described with continued reference to Figs. 1 to 8 and further with reference to Figs. 9 and 10.

**Fig. 9** schematically shows a top view of the head 22 of a person wearing headphones (or a headset), in a first orientation, and **Fig. 10** schematically shows a top view of the head 22 of the person from Fig. 9, in a second orientation. The reference number 22 is respectively placed towards the direction in which head 22 is facing. In other words, in the orientation of Fig. 9, the head 22 is turned towards the top of the figure, whereas in Fig. 10, the head 22 is turned towards the left.

Figs. 9 and 10 schematically show headphones worn by the person, whereby reference number 20 indicates a right-hand portion of the headphones and reference number 21 indicates a left-hand portion of the headphones. In the embodiment shown, the headphones 20, 21 are headphones with surround sound function. The headphones are further equipped with one or more (built-in) devices 23 for determining the orientation/position of the headphones, in particular with respect to a local or global reference. Such devices 23 can, for example, comprise a gyroscope and/or an accelerometer, in particular a 3-axis accelerometer, for example one gyroscope/accelerometer per headset or, as shown in Fig. 3, one gyroscope/accelerometer 23 each for the right-hand portion 20 and the left-hand portion 21 of the headphones. Such devices 23 can, for example, (also) determine the orientation/position of the headphones with respect to a satellite-based signal, such as a GPS signal.

We now assume that the person (whose head 22 is shown in Figs. 9 and 10) is sitting on the front right-hand seat 12 of vehicle 15. The person shown in Fig. 9 is initially facing in the direction of travel of vehicle 15, i.e. towards the front of vehicle 15. We further assume that the system described above with reference to Fig. 1 is intended to modify a spatial audio pattern of headphones 20, 21 as shown in Fig. 9, for example as a result of vehicle 15 turning left. Accordingly, the spatial audio pattern, starting from a circular reference spatial audio pattern, is stretched into an oval spatial audio pattern 42, is rotated anticlockwise and is shifted towards the rear right so that the sound volume at a forward, left-hand position with respect to person 22 is increased, whereas it is reduced at a rearward, right-hand position with respect to person 22. In relation to the head 22 of the person, the location of increased sound volume (here indicated by alignment marker 43) may be considered to correspond to a direction of 11 o'clock (12 o'clock being straight ahead). In order for the system to modify the spatial audio pattern in the way described, and to generate the audible sound in accordance with this spatial audio pattern, the system determines, using gyroscopes and/or accelerometers 23 or similar, the orientation and/or position of the headphones 20, 21 in relation to vehicle 15. On determining that the person is facing straight ahead, the system causes the headphones 20, 21 to output the audible sound in accordance with the specified spatial audio pattern 42.

Referring now to Fig. 10, the person has turned their head 22 by 90° towards the left. What was, in Fig. 9, considered to correspond to a direction of 11 o'clock with respect to person 22 is now at a location which can be considered to correspond to a direction of 2 o'clock with respect to person 22. Again using information (provided by gyroscopes and/or accelerometers 23 or similar) regarding the (changed) orientation/position of the headphones, the system can cause the headphones 20, 21 to modify the spatial audio pattern in the way described, and to generate the audible sound in accordance with this spatial audio pattern 42. It can therefore be seen that the system in accordance with this embodiment can modify the spatial audio pattern in a manner consistent with respect to vehicle 15, regardless of the position/orientation of the sound system (in the example of Figs. 9 and 10 the headphones 20, 21).

Ensuring that the spatial audio pattern is modified in a manner consistent with respect to vehicle 15, in particular that the "correct" portion of headphones 20, 21 is activated and at an appropriate volume in accordance with this spatial audio pattern, can be implemented in at least two ways, which will be explained in the following.

In the first of these implementations, the gyroscopes and/or accelerometers 23 or similar provide information regarding the orientation/position of the headphones 20, 21 to the processing unit 1. The processing unit 1 then generates the control signal taking into account this information, i.e. the control signal then includes information as to which portion of headphones 20, 21 to activate and at what volume to result in the appropriate spatial audio pattern 42. The headphones 20, 21 can then use the received control signal to output the audible sound. In this case the headphones 20, 21 do not need to calculate themselves which portion of headphones 20, 21 to activate and at what volume (taking into account the desired spatial audio pattern and the orientation/position of the headphones 20, 21) since the control signal received from processing unit 1 already contains this information.

In the second of these implementations, the gyroscopes and/or accelerometers 23 or similar again provide information regarding the orientation/position of the headphones 20, 21. However, this information is not transmitted to the processing unit 1 so that the processing unit 1 then generates the control signal without being aware of the orientation/position of headphones 20, 21. The control signal will therefore also not include information as to which portion of headphones 20, 21 to activate and at what volume but instead informs the headphones 20, 21 of the desired (modified) spatial audio pattern position 21 in relation to vehicle 15. The headphones 20, 21 can then use the received control signal and the information provided by its own gyroscope(s) and/or accelerometer(s) 23 or similar to calculate which portion of headphones 20, 21 to activate and at what volume so that the spatial audio pattern will be modified accordingly.

Techniques for determining the location of a portable device such as headphones 20, 21 with respect to a reference, such as vehicle 15 or a particular reference location within the vehicle 15, are known per se. For example, if a portable device such as headphones 20, 21 are connected to processing unit 1 or a cradle 6, 7 or some other reference point of vehicle 15 via Bluetooth^{®} or similar, signal parameters such as the angle of arrival, potentially detected at multiple, spaced apart locations, can be used to determine the relative location of the acoustic output device.

In a variant, the orientation/position of the headphones 20, 21 is detected by one or more cameras or other sensors, such as camera 16 shown in Fig. 1, and the corresponding information is then provided to processing unit 1 and/or the headphones 20, 21. Camera 16 may be substantially permanently installed in vehicle 15. The position of camera 16 in Fig. 1 is indicative only; other locations are possible.

A further embodiment makes use of shakers 17, which are shown in Fig. 1. Although shakers 17 may not necessarily be able to output an audible sound, they will nevertheless be considered to form part of any of the sound systems described herein. The modification of a spatial audio pattern associated with such a sound system may therefore include activating one or more shakers, for example shakers in a right-hand portion of a seat when vehicle 15 is passing through a curve towards the right, and shakers in a left-hand portion of a seat when vehicle 15 is passing through a curve towards the left.

While at least one example embodiment of the present invention has been described above, it has to be noted that a great number of variations thereto exist. Furthermore, it is appreciated that any described example embodiments only illustrate non-limiting examples of how the present invention can be implemented and that it is not intended to limit the scope, the application or the configuration of the apparatuses and methods described herein. Rather, the preceding description will provide the person skilled in the art with instructions for implementing at least one example embodiment of the invention, whereby it has to be understood that various changes of functionality and the arrangement of the elements of the example embodiment can be made without deviating from the subject-matter defined by the appended claims, as well as their legal equivalents.

### List of Reference Signs

- 1: processing unit
- 2: acoustic output devices / loudspeakers / surround sound system
- 3: portable device / headphones
- 4: wired acoustic output device / headphones
- 5: wireless acoustic output device / headphones
- 6: wired cradle / holder
- 7: wireless cradle / holder
- 8: (wireless) interface
- 9: detector
- 10: personal device
- 11-14: seat
- 15: vehicle
- 16: camera / detector
- 17: shakers
- 20: headphones (right-hand portion)
- 21: headphones (left-hand portion)
- 22: head of user
- 23: position and/or orientation determination devices / gyroscopes / accelerometer
- 30 - 36: method steps
- 40: reference spatial audio pattern
- 41: alignment marker (of reference spatial audio pattern)
- 42: modified spatial audio pattern
- 43: alignment marker (of modified spatial audio pattern)
- Fa: accelerating force
- Fb: braking force
- Fi: inertial force
- M: torque

## Claims

1. A system (1, 2-5, 9, 17) for providing an indication of an acceleration of a vehicle (15) or a change of orientation of the vehicle (15) with respect to the environment of the vehicle (15), the system (1, 2-5, 9, 17) comprising:
at least one detector (9) configured to detect an actual acceleration of the vehicle (15) or a change of orientation of the vehicle (15) and to provide a detection output based thereon;
a processing unit (1) configured to receive the detection output, the processing unit (1) further being configured to generate a control signal based thereon; and
a sound system (2-5, 17) comprising a plurality of acoustic output devices (2-5, 17),
wherein the sound system (2-5, 17) is configured to receive the control signal and to generate and output an audible sound as a function of the control signal, wherein the control signal is arranged to cause a spatial audio pattern (42) of the sound system (2-5, 17) to be modified when compared with a reference spatial audio pattern (40) applicable when no actual acceleration of the vehicle (15) and no change of orientation of the vehicle (15) has been detected.

2. The system (1, 2-5, 9, 17) according to claim 1, wherein the at least one detector (9) is configured to detect the change of orientation over a specified period of time so as to derive a change from a first orientation to a second orientation in said period of time, thereby deriving a measure of the change of orientation.

3. The system (1, 2-5, 9, 17) according to claim 2, wherein the change of orientation from the first orientation to the second orientation in said period of time represents a rotation in a first rotational sense, and
wherein, when the at least one detector (9) detects said change of orientation, the control signal is arranged to cause the spatial audio pattern (42) of the sound system (2-5, 17) to be modified by rotating the spatial audio pattern (42) of the sound system (2-5, 17) with respect to the vehicle (15) at least substantially in the first rotational sense.

4. The system (1, 2-5, 9, 17) according to any one of the preceding claims, wherein, when the at least one detector (9) detects said change of orientation, the control signal is further arranged to cause the spatial audio pattern (42) of the sound system (2-5, 17) to be distorted when compared with a situation when no change of orientation has been detected.

5. The system (1, 2-5, 9, 17) according to claim 3 or 4, wherein the extent of the rotation or distortion of the spatial audio pattern (42) is related to the change of orientation per unit of time via one of a monotone function, a strictly monotone function, a monotonically increasing function, a strictly increasing function, a linear function, a function which increases at a smaller than linear rate or a function which increases at a greater than linear rate.

6. The system (1, 2-5, 9, 17) according to any preceding claim, wherein, when the at least one detector (9) detects said acceleration, the control signal is arranged to cause the spatial audio pattern (42) of the sound system (2-5, 17) to be modified by:
rotating the spatial audio pattern (42) of the sound system (2-5, 17) with respect to the vehicle (15) and/or
distorting the spatial audio pattern (42) of the sound system (2-5, 17) when compared with a situation when no acceleration has been detected.

7. The system (1, 2-5, 9, 17) according to claim 6, wherein the extent of the rotation or distortion of the spatial audio pattern (42) is related to a measure of the acceleration via one of a monotone function, a strictly monotone function, a monotonically increasing function, a strictly increasing function, a linear function, a function which increases at a smaller than linear rate or a function which increases at a greater than linear rate.

8. The system (1, 2-5, 9, 17) according to any preceding claim, wherein the system (1, 2-5, 9, 17) is arranged to cause the spatial audio pattern (42) to return to, or towards, the reference spatial audio pattern (40)
- in the absence of any actual acceleration of the vehicle (15) and/or
- in the absence of any change of orientation of the vehicle (15) and/or
- on the expiry of a specified period of time
after the spatial audio pattern (42) has been modified.

9. The system (1, 2-5, 9, 17) according to any preceding claim, wherein the sound system (2-5, 17) comprises a portable device (3-5), in particular a portable device (4, 5) that is proprietary to the vehicle (15) or a personal device (3).

10. The system (1, 2-5, 9, 17) according to claim 9, wherein the processing unit (1) is arranged to cause the spatial audio pattern (42) to be modified in such a way that a user (22) of the portable device (3-5) perceives the spatial audio pattern (42) as having been modified in a substantially consistent manner, irrespective of the location and/or orientation of the personal device (3-5) relative to the vehicle (15).

11. The system (1, 2-5, 9, 17) according to any preceding claim, wherein the plurality of acoustic output devices (2-5, 17) comprises at least one shaker (17), preferably a plurality of shakers (17).

12. The system (1, 2-5, 9, 17) according to claim 11, wherein, when the at least one detector (9) detects said change of orientation and/or said acceleration, the control signal is further arranged to cause the at least one shaker (17), in particular the plurality of shakers (17) or a subset thereof, to be activated, in particular in dependence upon the detected change of orientation and/or the detected acceleration.

13. A vehicle (15) comprising the system (1, 2-5, 9, 17) according to any preceding claim.

14. A method of providing an indication of an acceleration of a vehicle (15) or a change of orientation of the vehicle (15) with respect to the environment of the vehicle (15), the method comprising:
detecting (31) an actual acceleration of the vehicle (15) or a change of orientation of the vehicle (15) and providing (32) a detection output based thereon;
processing (33) the detection output and generating (34) a control signal based thereon; and
outputting (35) an audible sound as a function of the control signal via a sound system (2-5, 17) comprising a plurality of acoustic output devices (2-5, 17),
wherein a spatial audio pattern (42) of the sound system (2-5, 17) is modified when compared with a reference spatial audio pattern (40) applicable when no actual acceleration of the vehicle (15) and no change of orientation of the vehicle (15) has been detected.

15. A computer program product comprising a program code which is stored on a computer readable medium, for carrying out the method according to claim 14.
